# EUROPÄISCHE PATENTSCHRIFT

(11) **EP 2 286 987 B1**
(45) Veröffentlichungstag und Bekanntmachung des Hinweises auf die Patenterteilung: **09.05.2012**
(21) Anmeldenummer: 10172667.7
(22) Anmeldetag: 12.08.2010
(51) Int. Cl.: B29D 30/46, B26D 1/00, B26D 1/08, B26D 7/02

(54) **Schneideinrichtung zum Schneiden eines dünnen und klebrigen Bandes, insbesondere eines Cordbandes**
Cutting device for cutting a thin and adhesive belt, in particular a cord belt
Dispositif de coupe pour couper une bande fine et collante, notamment une bande de corde

(30) Priorität: 17.08.2009 DE 102009037506
(43) Veröffentlichungstag der Anmeldung: 23.02.2011
(73) Patentinhaber: Karl Eugen Fischer GmbH, 96224 Burgkunstadt (DE)
(72) Erfinder: Hoffmann, Bernd, 96224 Burgkunstadt (DE)
(74) Vertreter: Blaumeier, Jörg

(56) Entgegenhaltungen:
- EP-A1- 1 243 404
- WO-A1-2008/123772
- CH-A- 447 771
- DE-C1- 10 203 447
- DE-U1- 8 507 169
- US-A- 3 726 169

## Beschreibung

Die Erfindung betrifft eine Schneideinrichtung zum Schneiden eines dünnen und klebrigen Bandes, insbesondere eines Cordbandes, umfassend ein Ober- und ein Untermesser, eine Zugvorrichtung zum Hindurchziehen des zu schneidenden Bandabschnitts durch die Messer, sowie einen oberseitig auf das Band aufsetzbaren Niederhalter umfassend eine Magnetleiste zum Fixieren des Bandes, welche Magnetleiste direkt mit im Band enthaltenen Metallelementen oder einer unterhalb des Bandes angeordneten Klemmplatte derart zusammenwirkt, dass das Band mit seiner vorlaufenden Kante zum Erfassen mit einem Greifabschnitt der Zugvorrichtung anhebbar ist.

Eine derartige Schneideinrichtung ist beispielsweise aus EP 1 243 404 B1 bekannt. Sie dient zum Schneiden von in ihrer Länge exakt bemessenen Abschnitten von einem endlosen Band, das von einer Abwickelrolle abgezogen wird. Ein solches Band ist beispielsweise ein Textil - oder Stahlcordband, wie sie beispielsweise im Rahmen der Reifenherstellung verarbeitet werden.

Eine aus dem genannten Stand der Technik bekannte Schneideinrichtung umfasst ein Ober- und ein Untermesser, wobei das Obermesser vertikal relativ zum feststehenden Untermesser bewegbar ist. Vorgesehen ist ferner eine Zugvorrichtung umfassend einen Greiferabschnitt, mit dem die vorlaufende Kante des Bandes, die sich an der Schneidkante des Untermessers befindet, gegriffen wird, und mit der das Band in der gewünschten Länge des Bandabschnitts durch die aufgefahrenen Messer gezogen wird. Weiterhin ist ein Niederhalter mit einer Magnetleiste vorgesehen, die zum einen zum Fixieren des Bandes während des Schnittes dient, zum anderen dient sie dazu, das Band etwas anzuheben, damit der Greiferabschnitt die vorlaufende Bandkante unterfahren und erfassen kann, um das Band nachfolgend abzuziehen.

Bei der aus EP 1 243 404 B1 bekannten Schneideinrichtung umfasst der Niederhalter einen sich parallel zur Schneidkante erstreckenden hohlen Träger, in dem mehrere Hubzylinder angeordnet sind, die die Magnetleiste tragen. Über diese Hubzylinder kann die Magnetleiste in und aus dem hohlen Träger bewegt werden. Die Magnetleiste wirkt zum Fixieren des Bandes mit einer unterhalb des Bandes angeordneten Klemmplatte zusammen, auf der das Band ansonsten lose aufliegt, während der Fixierung jedoch zwischen Klemmplatte und Magnetleiste verklemmt ist. Der hohle Träger befindet sich, gesehen in Förderrichtung des Bandes, an einer Position deutlich vor dem Untermesser, d. h., dass die Magnetleiste das Band an einer Position deutlich vor dem Untermesser und damit der eigentlichen Schneidkante klemmt.

Die Funktion ist nun derart, dass nach einem erfolgten Schnitt und Abtransport des geschnittenen Bandabschnitts die Zugvorrichtung zur zu greifenden Bandkante fährt, wobei das Band bereits zwischen der Magnetleiste und der von der Magnetleiste angezogenen Klemmplatte verklemmt ist. Sodann wird der Niederhalter wieder etwas angehoben, d. h., der hohle Träger wird nach oben bewegt, so dass das Band mit seiner zu greifenden Kante etwas angehoben wird, wonach der Greifabschnitt der Zugvorrichtung die Bandkante greift. Anschließend wird die Magnetleiste über die Hubzylinder in das Innere des hohlen Trägers gefahren, was dazu führt, dass das Band samt Klemmplatte etwas angehoben wird, bis das Band gegen den hohlen Träger anliegt. Bei weiterem Einfahren der Magnetleiste reißt die magnetische Fixierung der Klemmplatte ab, d. h., die Bandklemmung wird gelöst, das Band wird freigegeben. Der hohle Träger dient also quasi als Abstreifer und ist zum Lösen der Bandklemmung zwingend erforderlich. Sodann kann die Zugvorrichtung das freigegebene Band durch die Messer ziehen, bis die Endstellung erreicht wird, wonach der Niederhalter erneut abfährt und die Magnetleiste wiederum auf das Band gesetzt wird und dieses in Verbindung mit der Klemmplatte klemmt, wonach der Schnitt erfolgt.

Wie beschrieben befindet sich die Magnetleiste an einer Position deutlich vor dem Untermesser und damit deutlich vor der Schneidkante. Zwar ist das Band während des Schnittes geklemmt, jedoch ist eine beachtliche freie Bandlänge zwischen der Vorderkante der Magnetleiste und der Schneidkante gegeben. Nachdem das Band während des Schnitts mechanisch beansprucht wird, kann es nun unmittelbar nach dem Schnitt dazu kommen, dass sich das Band im Kantenbereich verformt, entweder wird es schnittbedingt etwas gedehnt, oder das Band zieht sich aufgrund inhärenter Bandspannungen etwas zusammen. Dies ist möglich, nachdem eine beachtliche freie Länge zwischen Klemmort und Schneidort gegeben ist.

Ferner ist der Niederhalter aufwendig konzipiert, da zwingend der hohle Träger, der als Abstreifer zum Lösen der magnetischen Kopplung zwischen Magnetleiste und Klemmplatte dient, vorzusehen ist.

Aus DE 102 03 447 C1 ist eine Schere zum Abtrennen von Abschnitten von einem mittels einer Greifervorrichtung durchgezogenen Materialband, insbesondere einem Stahlcordband, beschrieben, die es ermöglicht, einen geschnittenen Bandabschnitt bei seiner Übergabe auf das Transportband so zu führen, dass sich der Bandabschnitt während der Übergabe nicht verzieht. Zu diesem Zweck ist ein Gegenhalter vorgesehen, der ausschließlich mit dem Obermesser zusammenwirkt, er befindet sich in direkter Verlängerung vertikal unterhalb des Obermessers und ist einem Bandabschnitt des Aufnahmetransportbands zugeordnet, also dem Band, das den geschnittenen Bandabschnitt aufnimmt und abtransportiert wird. Für den Schnitt fährt der Gegenhalter etwas nach oben und legt sich von unten an das zu schneidende Band, von oben kommt das Obermesser und schneidet das über den Gegenhalter gegengelagerte Materialband. Während der Schnittbewegung bewegt sich das Obermesser und der Gegenhalter simultan nach unten.

US 3,726,169 beschreibt eine Schneidvorrichtung für Metallgewebe, bei der Klemmbacken vorgesehen sind, die eine feste Klemmverbindung zwischen dem Band und dem Untermesser herstellen. Geschnitten wird mit einer Schneidscheibe. Die dort beschriebene Vorrichtung ermöglicht eine Ausrichtung der Klemmbacken direkt auf die Schneidlinie, wodurch eine Verschiebung des Bandes während des Schneidvorgangs unmöglich gemacht wird.

Der Erfindung liegt damit das Problem zugrunde, eine Schneideinrichtung anzugeben, die ein exakteres Schneiden bei gleichzeitiger Vereinfachung der Ausgestaltung des Niederhalters ermöglicht.

Zur Lösung dieses Problems ist bei einer Schneideinrichtung der eingangs genannten Art erfindungsgemäß vorgesehen, dass die stets freiliegende Magnetleiste in der das Band niederhaltenden Stellung das Band von oben direkt auf das Untermesser oder eine das Untermesser übergreifende Zwischenplatte drückt.

Bei der erfindungsgemäßen Schneideinrichtung liegt die Magnetleiste zu jedem Zeitpunkt frei, ist also nicht in einem Hohlträger oder dergleichen integriert respektive in einen solchen einfahrbar. Sie ist derart relativ zum Untermesser angeordnet, dass sie das Band in der Fixierstellung während des Schnitts direkt gegen das Untermesser odereine das Untermesser übergreifende, auf diesem also oberseitig aufliegende dünne Zwischenplatte drückt, d. h., die Magnetleiste liegt zumindest abschnittsweise direkt oberhalb des Untermessers. Folglich liegt die vordere Magnetleistenkante sehr nahe an der eigentlichen Schneidkante der Messer, mithin ist also die freie Länge des Bandes zwischen der Leistenvorderkante und der Schneidkante äußerst kurz. Hieraus resultiert, dass es nach dem Schnitt zu keinen Bandverformungen aufgrund etwaiger aufgebauter oder relaxierender Spannungen im Bandmaterial kommt, nachdem der Ort der Bandfixierung nur minimal vom Schneidort beabstandet ist.

Weiterhin ist bei der erfindungsgemäßen Schneideinrichtung kein als Abstreifer dienender Hohlträger, in den die Magnetleiste eingefahren wird, erforderlich. Denn infolge der schneidkantennahen Klemmung kann das Band bereits mit dem Greifen gelöst bzw. nach dem Greifen der vorlaufenden Bandkante durch einfaches Anheben der Magnetleiste freigegeben werden, da das Band unmittelbar benachbart durch die Greifeinrichtung lagefest fixiert ist. Dies gilt unabhängig davon, ob die Schneideinrichtung zum Schneiden von Stahlcordband dient, wobei in diesem Fall keine Klemmplatte erforderlich ist, da die Magnetleiste direkt mit den Metallelementen, also den Stahlcordfäden des Bandes zusammenwirkt, so dass das Band zum Greifen mit der Greifeinrichtung leicht angehoben werden kann, oder ob die Schneideinrichtung zum Schneiden von Textilcordband dient, wobei dann die Klemmplatte vorgesehen ist, die der Verklemmung des Bandes zur Magnetleiste hin dient und mit angehoben wird, um die Bandkante mit dem Greiferabschnitt zu greifen. Denn in jedem Fall ist die Bandkante unmittelbar benachbart zur Magnetleistenklemmung lagefest fixiert, so dass es beim Anheben der Magnetleiste zwangsläufig zum Abreißen des Magnetfelds zwischen Magnetleiste und Stahlcordfäden respektive Klemmplatte kommt, wodurch das Band freigegeben wird und es zu keinen Bandverformungen kommt. Infolgedessen lässt die erfindungsgemäße Schneideinrichtung eine wesentlich einfachere Ausbildung des Niederhalters zu, bei dem lediglich eine trägerartige oder ähnliche Halterung für die Magnetleiste erforderlich ist, die stets freiliegt und sich während des Betriebs stets in unmittelbarer Nachbarschaft zu dem Untermesser befindet.

Die Magnetleiste übergreift das Untermesser um wenigstens ein Drittel, vorzugsweise um wenigstens die Hälfte der Messerbreite. D. h., dass sich die Vorderkante des Messers bevorzugt im Bereich der Messermitte, gegebenenfalls sogar noch etwas näher zur Schneidkante hin befindet, so dass ein relativ großer Übergriff und damit eine möglichst nahe Fixierung benachbart zur Klemmkante unter Verringerung der freien Bandlänge möglich ist.

Die Zwischenplatte ist bevorzugt an der Klemmplatte vorgesehen, wobei die Klemmplatte insbesondere dann zum Einsatz kommt, wenn mit der Schneideinrichtung ein Band ohne Metallelemente geschnitten werden soll, worauf nachfolgend noch eingegangen wird. Die Zwischenplatte erstreckt sich von der Klemmplatte fahnenartig zur Seite und übergreift das Untermesser. Die Oberseite der Klemmplatte nebst angesetzter Zwischenplatte (die mit der Klemmplatte einstückig sein kann oder an dieser angeschraubt sein kann) ist vorzugsweise ebenflächig, nachdem das Band auf dieser Seite liegt und bewegt wird, sie kann gleichermaßen geriffelt, angefast oder dergleichen sein.

Sofern die Schneideinrichtung zum Schneiden von Stahlcordband dient, erfolgt die Fixierung respektive Anbindung des Bandes an die Magnetleiste unmittelbar durch die magnetische Wechselwirkung zwischen der Permanentmagnetleiste und den Stahlcordfäden im Band. Wird die Magnetleiste auf das Band gesetzt, so kommt es zur magnetischen Anbindung des Bandes an die Leiste. Bei einem leichten Anheben der Leiste wird auch das Band mit angehoben, so dass der Greiferabschnitt das Band kantenseitig unterfahren und erfassen kann. Bei einer solchen Schneideinrichtung kann die Magnetleiste relativ schmal sein, sie muss nicht über die Hinterkante des Untermessers hinausragen, kann dies jedoch selbstverständlich, um den Auflagebereich zu vergrößern. Sofern mit der Schneideinrichtung ein Band geschnitten werden soll, das keine derartigen Metallelemente aufweist, beispielsweise ein Textilcordband, so ist die vertikal bewegbare ferromagnetische leistenförmige Klemmplatte vorgesehen, die mit der Permanentmagnetleiste zusammenwirkt, von dieser also angezogen wird, worüber das dazwischen befindliche Band fixiert wird. Wird die Magnetleiste angehoben, wird mit ihr auch die Klemmplatte und zwangsläufig das dazwischen befindliche Band leicht angehoben. Um sicherzustellen, dass es zu dieser Magnetkopplung zwischen Magnetleiste und Klemmplatte kommt, erstreckt sich erfindungsgemäß die Magnetleiste über die nicht mit dem Obermesser zusammenwirkende hintere Kante des Untermessers hinaus, wobei die Klemmplatte, wenn an ihr keine Zwischenplatte vorgesehen ist, bis auf einen schmalen Spalt unmittelbar benachbart an das Untermesser angrenzt. Über diese Anordnung kommt es, vertikal gesehen, zu einem Übergriff der Magnetleiste über die Klemmplatte, so dass es zwangsläufig zu einer magnetischen Kopplung kommt, wenn die Magnetleiste hinreichend weit abgesenkt ist. Sofern an der Klemmplatte eine das Untermesser übergreifende Zwischenplatte vorgesehen ist, ist es nicht erforderlich, dass die Magnetleiste das Untermesser seitlich überragt, da die magnetischen Wechselwirkung zur Klemmplatte hin bereits durch die magnetische Wechselwirkung mit der Zwischenplatte gegeben ist und das Anheben und Absenken der Klemmplatte dadurch sichergestellt ist. Gleichwohl kann sich die Magnetleiste natürlich auch bei dieser Ausgestaltung seitlich über das Untermesser hinaus erstrecken.

Um bei Einsatz einer Klemmplatte, sei es ohne, sei es mit Zwischenplatte, das Lösen der magnetischen Kopplung der Klemmplatte mit der Magnetleiste zum Freigeben des Bandes weiter zu fördern ist die vertikal bewegbare Klemmplatte erfindungsgemäß in ihrer oberen Endstellung anschlagbegrenzt. D. h., dass die Klemmplatte nur ein bestimmtes Stück frei nach oben angehoben werden kann, wobei diese Vertikalbewegung so bemessen ist, dass gerade der Hub, der zum Anheben der Bandkante zum Untergreifen und Erfassen durch den Greiferabschnitt erforderlich ist, durchgeführt werden kann. Wird die Magnetleiste jedoch zum Freigeben des Bandes weiter angehoben, läuft die Klemmplatte gegen einen festen oder einfahrbaren Anschlag, kann also nicht weiterbewegt werden, wodurch es zwangsläufig zum Abreißen der Magnetkopplung kommt. Alternativ kann die Klemmplatte auch aktiv über ein eigenes Stellelement wie einen hydraulischen oder pneumatischen Zylinder bewegt werden, sie wird folglich zum Anheben und Absenken aktiv über den Zylinder vertikal verstellt.

Wie beschrieben ist es bei der erfindungsgemäßen Schneideinrichtung lediglich erforderlich, die Magnetleiste an einem einfachen Querträger oder ähnlichem Halter anzubringen, der anhebbar und absenkbar ist, um die Magnetleiste relativ zum Band zu bewegen. Dabei sind unterschiedliche Beweglichkeiten des Trägers möglich. Nach einer ersten Erfindungsalternative kann die Magnetleiste an einem Träger, der um eine in Förderrichtung des Bandes gesehen vor den Messern liegende Schwenkachse verschwenkbar ist, und über wenigstens ein Stellelement, insbesondere einen hydraulischen oder pneumatischen Zylinder, zwischen einer das Band niederhaltenden unteren Stellung und einer vom Band gelösten oberen Stellung verstellbar ist, angeordnet sein. D. h., dass der Träger hier schwenkbar gelagert ist, mithin also auch die Magnetleistung zwischen der unteren und der oberen Stellung verschwenkt werden kann. Aufgrund des Abstands der Schwenkachse zur Magnetleiste und des relativ geringen Hubs zwischen unterer und oberer Stellung kommt es zwischen diesen Stellungen nur zu einer vernachlässigbaren Axialbewegung der Magnetleiste relativ zum Band, so dass beim Anheben des Bandes zum Greifen mit der Greifereinrichtung, welche Hubbewegung ja wesentlich kürzer ist als die Verstellbewegung zwischen unterer und oberer Endstellung, zu keinerlei relevanten Bandverschiebungen kommt. Eine solche Schwenklagerung ist relativ einfach zu realisieren, es ist lediglich eine Drehachse nebst Wälzlager vorzusehen.

Eine zweckmäßige Weiterbildung dieser Ausführung mit schwenkgelagertem Träger sieht vor, den Träger bei Bedarf auch manuell oder über wenigstens ein, gegebenenfalls weiteres Stellelement, insbesondere einen hydraulischen oder pneumatischen Zylinder, in eine oberhalb des Obermessers liegende Stellung zu schwenken. D. h., dass der Träger bei Bedarf über die obere Endstellung hinaus aufgeschwenkt und im Extremfall sogar in eine nahezu vertikale Position gebracht werden kann, in welcher die Magnetleiste vollständig aus dem Messerbereich bewegt ist. Dies ermöglicht es, ohne Weiteres in den Messerbereich zu gelangen, um dort Reparatur- oder Wartungsarbeiten oder einen Messeraustausch vornehmen zu können. Infolge der einfachen Ausführung des Niederhalters ist auch ein manuelles Aufschwenken ohne weiteres möglich, da der Niederhalter zwangsläufig mit relativ wenigen Bauteilen konzipiert werden kann.

Alternativ zur Schwenklagerung ist es selbstverständlich auch denkbar, die Magnetleiste an einem vertikal bewegbaren Träger, der über wenigstens ein Stellelement, insbesondere einen hydraulischen oder pneumatischen Zylinder, zwischen einer das Band niederhaltenden unteren Stellung und einer vom Band gelösten oberen Stellung verstellbar ist, anzuordnen. Hier ist also eine reine Vertikalbewegung der Leiste nebst Träger vorgesehen, wobei auch bei dieser Ausführungsalternative der Träger bei Bedarf manuell oder über wenigstens ein, gegebenenfalls weiteres, Stellelement, insbesondere einen hydraulischen oder pneumatischen Zylinder, in eine oberhalb des Obermessers liegende Stellung anhebbar ist. Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig.1: eine Prinzipdarstellung einer erfindungsgemäßen Schneideinrich- tung,
- Fig. 2 - 10: Prinzipdarstellungen zur Erläuterung des Betriebsablaufs beim Schneiden eines Bandes, mit zum Teil vergrößerten Detailansichten (Fig. 3 und 6),
- Fig. 11 -19: Prinzipdarstellungen zur Erläuterung des Betriebsablaufs beim Schneiden eines Bandes mit einer Schneideinrichtung einer zweiten Ausführungsform, mit zum Teil vergrößerten Detailansichten (Fig. 12 und 15),
- Fig. 20: eine detailliertere Darstellung der Schneideinrichtung, und
- Fig. 21 und 22: Prinzipdarstellungen (entsprechend den Fig. 12 und 15) einer Schneideinrichtung mit einer an der Klemmplatte angeordneten Zwi- schenplatte.

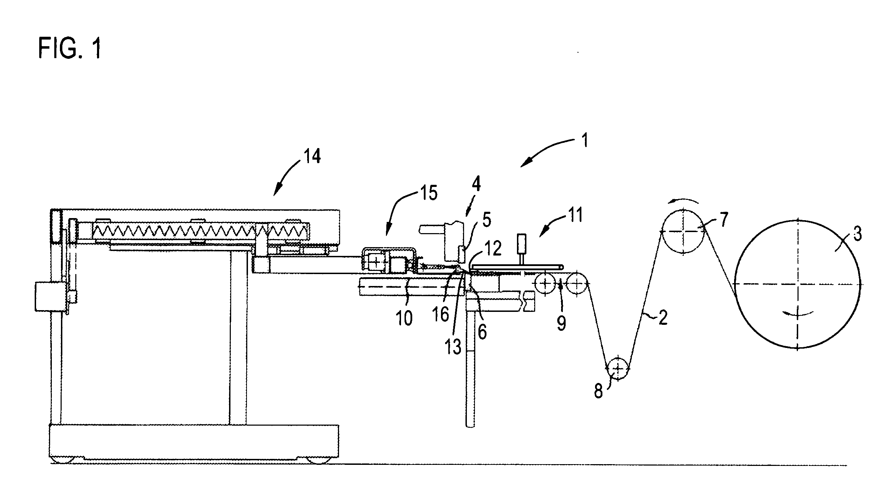

Fig. 1 zeigt eine erfindungsgemäße Schneideinrichtung 1, mit der ein Cordband 2, das von einer Vorratsrolle 3 abgezogen wird, geschnitten werden kann. Die Schneideinrichtung 1 umfasst eine Schneidvorrichtung 4 bestehend aus einem Obermesser 5, das vertikal bewegbar ist, und einem Untermesser 6, das lagefest ist. Das Cordband 2 wird über Umlenkrollen 7, 8 zur Schneideinrichtung 1 geführt und dort einem Einlaufförderband 9 zugeführt. Je nachdem wie der Schnittwinkel bezogen auf die Längsrichtung des Cordbandes 2 ausfallen soll, kann das Einlaufförderband 9 von der vertikalen Ausrichtung seiner Längsachse zu den Schneidkanten von Untermesser 6 und Obermesser 5 entsprechend um eine Vertikalachse verschwenkt werden. Das geschnittene Cordbandstück wird über ein Abtransportförderband 10 zu einer nachgeschalteten Verarbeitungseinheit, beispielsweise einer Spleißeinrichtung, transportiert.

Um das zu schneidende Cordband 2 in seiner Position im Bereich der Schneidkanten zu fixieren, ist ein Niederhalter 11 vorgesehen, umfassend eine Magnetleiste 12, die, worauf nachfolgend noch eingegangen wird, das Cordband 2 in unmittelbarer Nähe der Schneidkante 13 des Untermessers 6 fixiert, indem sie das Cordband 2 direkt auf das Untermesser 6 drückt. Die Magnetleiste ist an einem nachfolgend noch beschriebenen Träger angeordnet, der seinerseits um eine Schwenkachse bewegbar ist, um die Magnetleiste 12 vertikal zu bewegen.

Zum Fördern des zu schneidenden Cordbands 2 durch die beiden Messer 5, 6 hindurch ist eine Zugvorrichtung 14 vorgesehen, umfassend einen Greifer 15 mit einem oder mehreren nebeneinander angeordneten und gemeinsam betätigbaren Greifabschnitten 16, über die die vorlaufende Cordbandkante gegriffen werden kann. Der Greifer 15 ist horizontal bewegbar, kann also ausgehend von Fig. 1 nach links verschoben werden, wodurch das gegriffene Cordband ebenfalls nach links durch die beiden Messer 5, 6 hindurchgezogen wird. Über die Zugvorrichtung ist es nicht nur möglich, das Cordband in einer Richtung senkrecht zu den Schneidkanten der Messer 5, 6 zu ziehen, sondern auch in einer Richtung senkrecht dazu, so dass auch unterschiedliche Abzugswinkel eingestellt werden können.

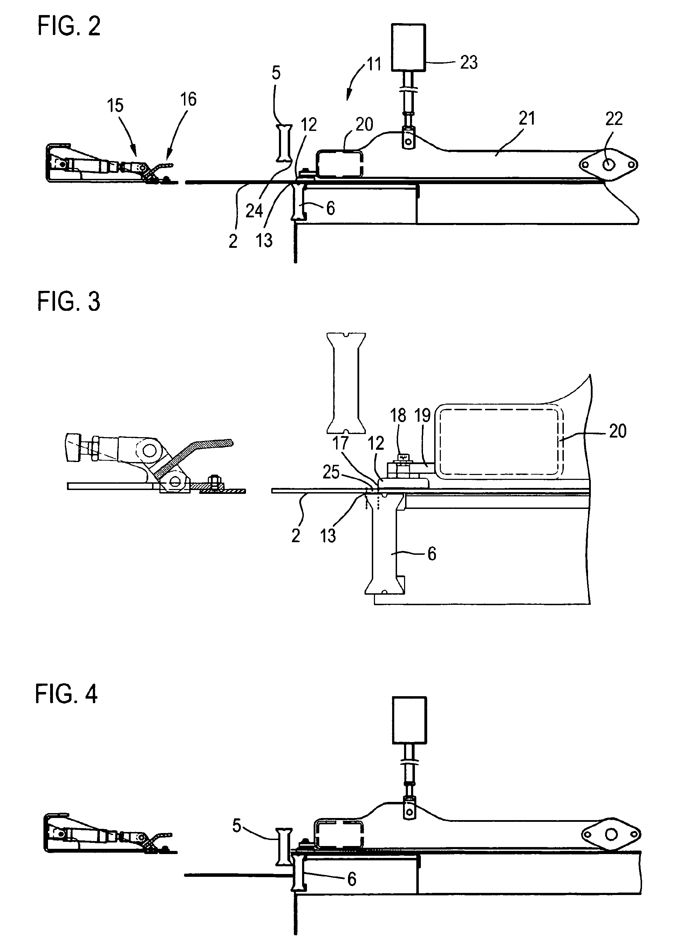

Das Funktionsprinzip der Schneideinrichtung 1 ist in den Fig. 2 - 10 näher dargestellt. In der in Fig. 2 gezeigten Ansicht befinden sich die einzelnen Einrichtungskomponenten unmittelbar vor dem Schnitt. Der Greifer 15 hat das Cordband 2 bereits durch die beiden Messer 5, 6 hindurchgezogen und durch Öffnen des Greifabschnitts 16 freigegeben, das Band liegt auf dem Abtransportband 10 auf, das hier nicht näher gezeigt ist. Der Niederhalter 11 ist in der unteren Endstellung, in welcher die Magnetleiste 12 das Band 2 direkt auf die Oberseite des Untermessers 6 drückt, wie Fig. 2 und insbesondere die vergrößerte Detailansicht gemäß Fig. 3 zeigt. Ersichtlich befindet sich die vordere Kante 17 der Magnetleiste 12 nahezu unmittelbar benachbart zur Schneidkante 13 des Untermessers 6, die Magnetleiste 12 übergreift das Untermesser 6 folglich um mehr als die Hälfte der Messerbreite. D. h., dass in dieser Position das Cordband 2 flächig zwischen der Oberseite des Untermessers 6 und der Unterseite der Magnetleiste 12 verklemmt wird. Die Magnetleiste 12 ist über eine Schraubenverbindung 18 an einer Halterung 19 befestigt, die wiederum an einem Querträger 20 angeordnet ist. Der Querträger 20 ist über zwei an ihm seitlich angreifende Trägerarm 21 um eine Schwenkachse 22,die horizontal verläuft, schwenkgelagert. In den Figuren ist lediglich ein Trägerarm 21 sichtbar. Zur Bewegung der Magnetleiste 12 ist ein hydraulischer oder pneumatischer Zylinder 23 vorgesehen, der an einem Trägerarm 21 angreift und zum Verschwenken desselben und mit ihm der Magnetleiste 12 um die Schwenkachse 22 dient.

Ausgehend von der in Fig. 2 gezeigten Stellung erfolgt im nächsten Schritt, siehe Fig. 4, der eigentliche Schnitt. Hierzu wird das Obermesser 5 nach unten gefahren, so dass seine Schneidkante 24 das Cordband 2 an der Schneidkante 13 des Untermessers 6 abtrennt. Das Cordband ist nach wie vor zwischen der Oberseite des Untermessers 6 und der Unterseite der Magnetleiste 12 verklemmt. Ersichtlich ist das verbleibende Cordbandstück 25, das sich zwischen der Vorderkante 17 der Magnetleiste 12 und der Schneidkante 13 des Untermessers 6 erstreckt, und das in seiner Länge durch die beiden gepunkteten Linien angegeben ist, äußerst kurz. Daraus resultiert, dass letztlich nach dem Schnitt kaum eine freie Bandlänge gegeben ist, die sich in irgendeiner Weise aufgrund des Abbaus etwaiger Spannungen oder dergleichen im Bandabschnitt 25 verformen könnte. D. h., der Bandabschnitt 25 bleibt in seiner Form nach dem Schnitt unverändert, da er während des Schneidens nicht bzw. wenn überhaupt nur unwesentlich aufgrund seiner Kürze gedehnt werden kann. Auch ein Zusammenziehen aufgrund inhärenter Spannungen ist aufgrund seiner Kürze wenn überhaupt nur vernachlässigbar zu besorgen. Dies deshalb, da durch die erfindungsgemäße Klemmung unmittelbar auf dem ca. 3 cm breiten Untermesser 6 wie beschrieben die freie Länge des Bandabschnitts 25 äußerst kurz ist und nur ca. 1 - 2 cm beträgt.

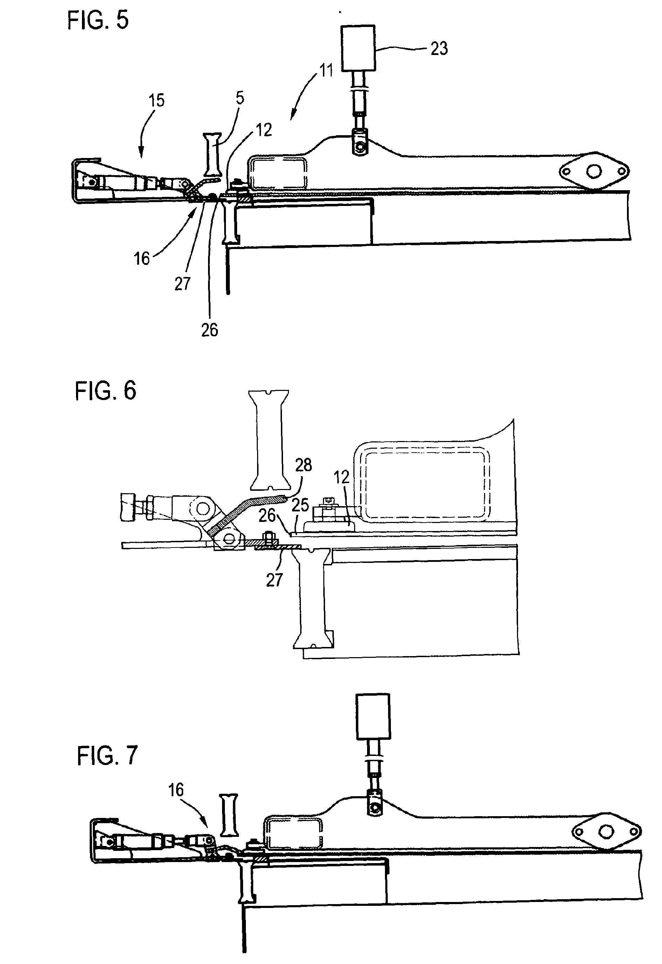

Nach dem Schnitt verfährt das Obermesser 5 wieder in die angehobene Stellung, siehe Fig. 5. Gleichzeitig bewegt der Zylinder 23 den Niederhalter 11 etwas nach oben, was dazu führt, dass auch die Magnetleiste 12 angehoben wird. Das Cordband 2 ist bei dieser Ausgestaltung als Stahlcordband ausgeführt, umfasst also im klebrigen Gummimaterial eingebettete Stahlcordfäden. Infolge dessen kommt es zu einer magnetischen Wechselwirkung der permanentmagnetischen Magnetleiste 12 mit den Stahlcordfäden, d. h., dass das Band magnetfeldbedingt an der Magnetleiste 12 haftet und mit angehoben wird, siehe Fig. 5. Die vorlaufende Bandkante 26 wird dabei nur um ca. 0,5 - 1 cm angehoben, so dass nur ein sehr schmaler Spalt gebildet wird, der jedoch groß genug ist, dass der Greifer 15 mit seinem Greifabschnitt 16 bzw. dessen unterem Auflageabschnitt 27 unter die Bandkante 26 fahren kann, siehe hierzu insbesondere Fig. 6. Ersichtlich liegt die Bandkante 26 über diesem Greiferauflageabschnitt 27.

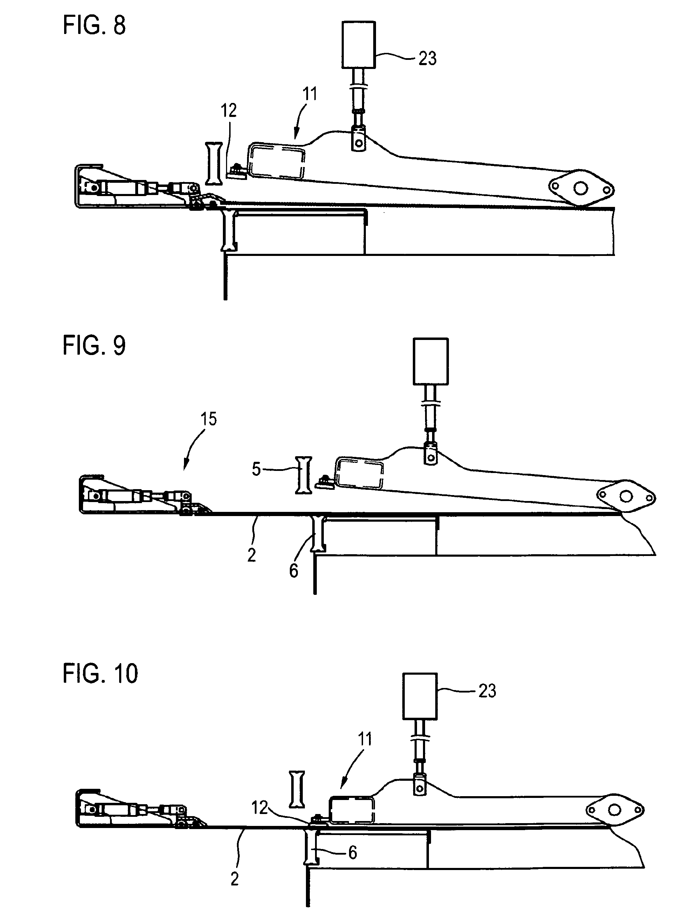

Im nächstfolgenden, in Fig. 7 gezeigten Schritt wird nun der Greiferabschnitt 16 geschlossen, d. h., der obere Greiferabschnitt 28 fährt nach unten. Hierbei greift er oberseitig am freien Bandabschnitt 25 an und nimmt diesen mit nach unten. Hierdurch kommt es bereits zu einem Lösen der Magnethaftung zwischen dem Cordband 2 und der Magnetleiste 12, was noch dadurch unterstützt wird, dass quasi gleichzeitig, siehe Fig. 8, über den Zylinder 23 der Niederhalter 11 respektive die Magnetleiste 12 angehoben wird. Der Ablöseprozess des Cordbands 2 von der Magnetleiste 12 wird hierdurch weiter unterstützt, das Cordband ist nun zwischen den beiden Greiferabschnitten 27, 28 fixiert. Ein Abstreifen des Cordbands ist hier infolge der unmittelbaren Magnetfixierung des Bandes an der Greiferklemmlinie nicht erforderlich, vielmehr ist allein das Greifen und gleichzeitige Anheben der Magnetleiste 12 ausreichend, um das Band verformungsfrei von der Magnetleiste 12 abzulösen.

Im in Fig. 9 gezeigten Schritt ist der geschlossene Greifer 15 wiederum nach links gefahren, so dass das Cordband 2 durch die beiden geöffneten Messer 5, 6 hindurchgezogen wird. Die Magnetleiste 12 ist hierbei in einer deutlich angehobenen Position, so dass sie keinerlei "magnetischen Einfluss" auf das Material nimmt.

Nach Erreichen der Durchzugsendstellung ist es wiederum erforderlich, vorbereitend für den Schnitt das Cordband 2 in seiner Lage im Schneidkantenbereich zu fixieren, wozu der Zylinder 23 den Niederhalter 11 und damit die Magnetleiste 12 wieder absenkt, so dass diese von oben auf das Cordband 2 aufgesetzt wird und gleichzeitig das Cordband 2 gegen die Oberseite des Untermessers 6 drückt. Nach erfolgter Klemmung öffnet sich der Greifer 15 wieder, die Ausgangsstellung gemäß Fig. 2 ist wieder erreicht, der nächste Schneidzyklus kann beginnen.

Die beschriebene Schneideinrichtung eignet sich zum Schneiden eines dünnen, klebrigen Bandes mit eingebetteten Metallelemente wie beispielsweise Stahlcordfäden, nachdem für das erforderliche leichte Anheben zum Unterfahren der Bandkante mit dem Greifer die magnetische Wechselwirkung zwischen der Magnetleiste 12 und den eingebrachten Metallelementen zum Anhaften des Bandes an der Magnetleiste 12 ausreichend ist.

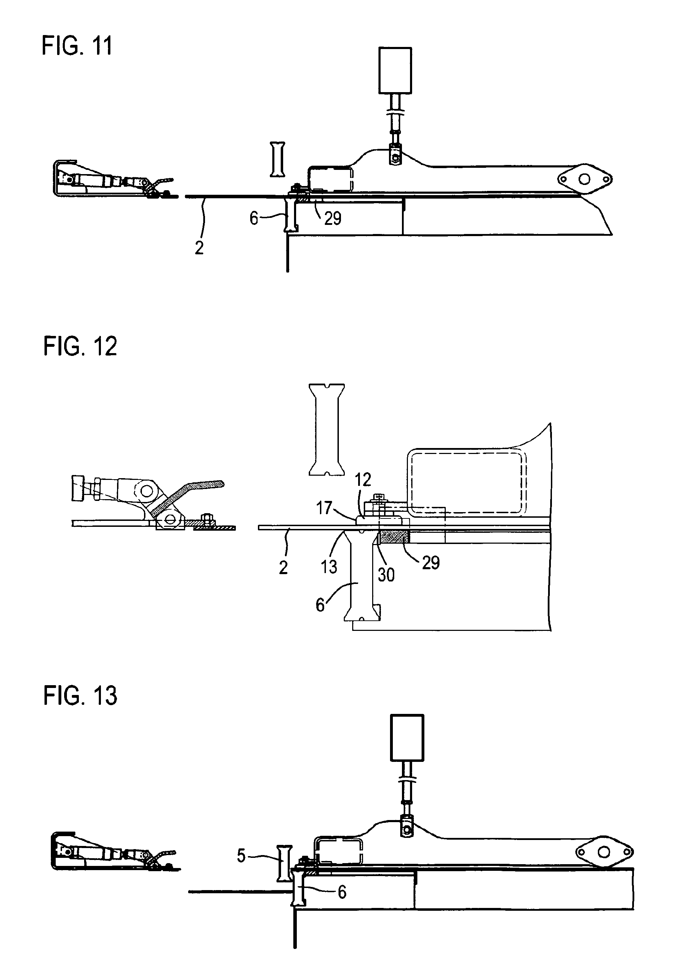

Die Fig. 11 - 19 zeigen eine Schneideinrichtung 1, die von der Grundkonzeption her der Schneideinrichtung 1 gemäß den Fig. 2 - 10 entspricht, jedoch zusätzlich unmittelbar benachbart zum Untermesser 6 eine leistenförmige Klemmplatte 29 aufweist, die über eine Linearführung vertikal bewegbar ist. Mit dieser aus ferromagnetischem Material bestehenden Klemmplatte 29 ist es möglich, auch Bandmaterial zur verarbeiten, das keine eingebrachten Metallelemente aufweist, mithin also selbst nicht magnetisch mit der Magnetleiste 12 wechselwirkt.

Ausgehend von Fig. 11 befindet sich das freigegebenen Cordband 2 in einer geklemmten, fixierten Stellung unmittelbar vor dem Schnitt. Die Magnetleiste 12 ist wieder abgesenkt, sie drückt das Cordband wiederum gegen die Oberseite des Untermessers 6. Wiederum liegt die vordere Kante 17 der Magnetleiste 12 nur minimal beabstandet zur Schneidkante 13 des Untermessers 6, so dass auch hier nur eine minimale Länge des nachfolgend freien weil nicht geklemmten Bandabschnitts 25 gegeben ist.

Wie aus Fig. 12 ersichtlich ist, erstreckt sich die Magnetleiste 12 jedoch auch ein kurzes Stück über die hintere Kante 30 des Untermessers 6, an welche über einen minimalen Spalte beabstandet die Klemmplatte 29 anschließt. D. h., dass die Magnetleiste 12 die ferromagnetische Klemmplatte 29 übergreift. Zwangsläufig treten beide in magnetische Wechselwirkung, so dass die Klemmplatte 29 von der Magnetleiste 12 angezogen wird. Es kommt folglich zu einem Verklemmen des Cordbands 2 zwischen der Klemmplatte 29 und der Magnetleiste 12.

Im nächstfolgenden Schritt, siehe Fig. 13, fährt das Obermesser 5 zur Durchführung des Schnitts ab, das Cordband 2 ist nach wie vor geklemmt. Infolge dieses kurzen freien Bandabschnitts 25 kommt es auch hier nicht zu irgendwelchen schnittbedingten Deformationen im Bereich der Bandkante 26.

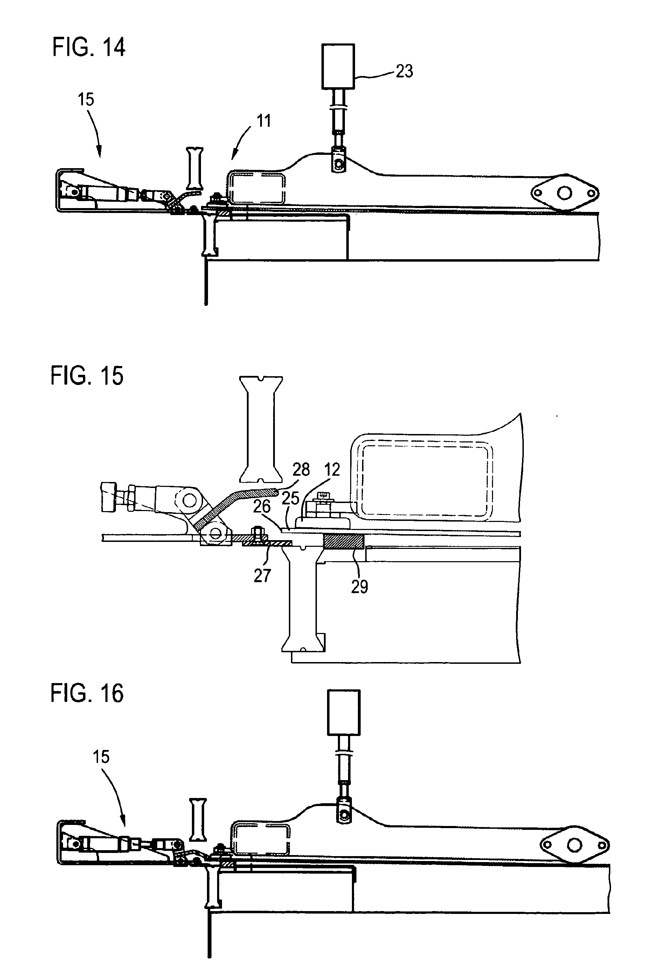

Im nächsten Schritt fährt der Greifer 15 erneut in die Greifstellung. Damit er das Band 2 untergreifen kann, bewegt der Zylinder 23 den Niederhalter 11 wieder etwas nach oben. Durch dieses Anheben der Magnetleiste 12 wird auch die Klemmplatte 29 infolge der magnetischen Kopplung zur Magnetleiste 12 mit angehoben, womit zwangsläufig einher geht, dass auch das Cordband 2 respektive die Bandkante 26 und der freie Bandabschnitt 25 angehoben werden. Ersichtlich, siehe Fig. 15, kann wiederum der Greiferauflageabschnitt 27 unter die Bandkante 26 fahren.

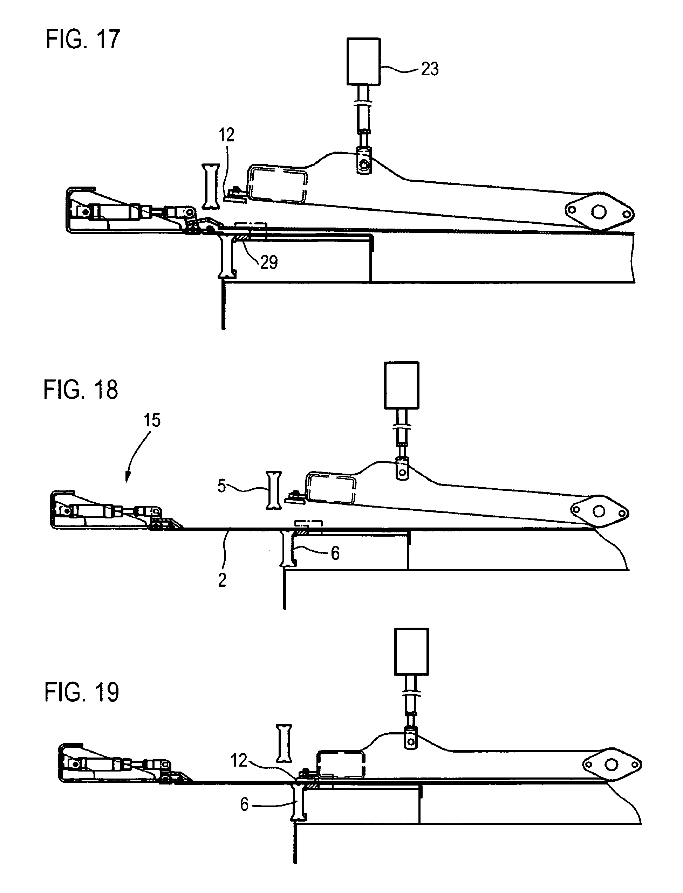

Im nächsten, in Fig. 16 gezeigten Schritt schließt sich der Greifer 15, d. h., der obere Greiferabschnitt 28 fährt nach unten und drückt hierbei auf die Oberseite des freien Bandabschnitts 25, nimmt diesen also mit nach unten und klemmt ihn zwischen sich und dem Auflageabschnitt 27. Hierdurch wird der Ablösevorgang des Cordbands von der Magnetleiste 12 eingeleitet. Dieser wird dadurch unterstützt, dass, siehe Fig. 17, im Wesentlichen gleichzeitig über den Zylinder 23 wiederum die Magnetleiste 12 angehoben wird. Ein gleichzeitiges Anheben der Klemmplatte 29 wird dadurch verhindert, dass die Klemmplatte 29 entweder in der in Fig. 15 gezeigten Greifstellung oder in einer unmittelbar darüber liegenden Stellung gegen Anschläge läuft, die entweder fest installiert sind oder bei Bedarf eingeschwenkt werden können. Mithin kommt es folglich zu einem Lösen der magnetischen Wechselwirkung zwischen Magnetleiste 12 und Klemmplatte 29, wenn die Magnetleiste 12 über den Zylinder 23 weiter nach oben bewegt wird. Die Klemmplatte 29 fällt in ihre Ausgangsposition, in der sie im Wesentlichen in der gleichen Ebene wie die Messeroberseite des Untermessers 6 liegt, zurück. Anstelle etwaiger Anschläge ist es selbstverständlich auch denkbar, die Klemmplatte 29 ausgehend von der in Fig. 15 gezeigten angehobenen Stellung auch aktiv über einen eigenen Antrieb wie einen Zylinder zum Lösen von der Magnetleiste 12 nach unten zu bewegen.

Auch hierbei kommt es zu keinerlei Banddeformationen, nachdem das Band über den Greifer 15 unmittelbar benachbart zum eigentlichen Klemmabschnitt des Bandes zwischen Magnetleiste 12 und Klemmplatte 29 fixiert ist.

Im nächsten Schritt, siehe Fig. 18, bewegt sich der Greifer 15 nach links und zieht das Band 2 durch die beiden Messer 5, 6 in die nächste Schneidposition, in der, siehe Fig. 19, durch erneutes Absenken der Magnetleiste 12 das Band zwischen der Oberseite des Untermessers 6 und der Oberseite der Klemmplatte 29 sowie der Unterseite der Magnetleiste 12 fixiert ist. Nach Öffnen des Greifers 15 kann der nächste Schneidzyklus, ausgehend von der Verfahrensposition gemäß Fig. 11, beginnen.

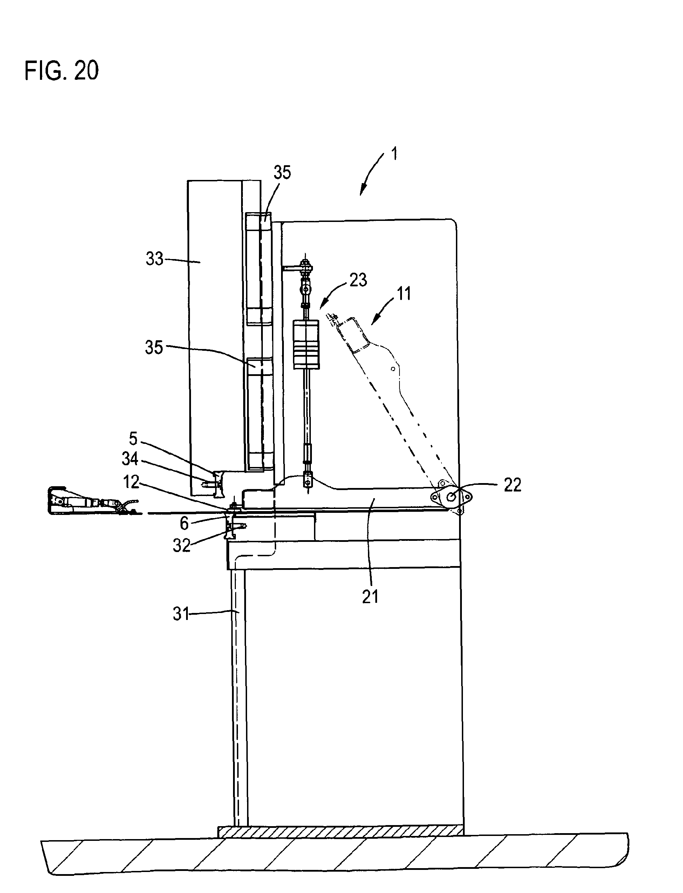

Fig. 20 zeigt eine detailliertere Ansicht der Schneideinrichtung 1, wobei diese Darstellung letztlich sowohl für die Ausführung ohne als auch mit Klemmplatte 29 gilt.

Gezeigt ist das Einrichtungsgestell 31 mit dem Untermesser 6, das gestellseitig über Schrauben 32 fixiert ist. Das Obermesser 5 ist an einem Messerbalken 33 ebenfalls über Schraubverbindungen 34 fixiert. Der Messerbalken 33 ist über Linearführungen 35 und Hubzylinder vertikal auf- und abbewegbar.

Gezeigt ist ferner der Zylinder 23, der der Auf- und Absenkbewegung des Niederhalters respektive der Magnetleiste 12 dient (auch hier ist nur ein Zylinder 23 dargestellt, wenngleich zwei Zylinder, jeweils mit einem Trägerarm 21 verbunden, vorgesehen sind). Jeder Zylinder 23 ist lösbar mit dem jeweiligen Trägerarm 21 verbunden. Dies ermöglicht es, nach Aushängen der Zylinder 23 den Niederhalter 11, siehe Fig. 20, um die Schwenkachse 22 deutlich über die obere Arbeitsstellung (siehe z. B. Fig. 8 und 17) aufzuschwenken, wie in Fig. 20 gestrichelt dargestellt ist. In dieser Position befindet er sich deutlich außerhalb des Bereichs der Messer, die beispielsweise für Wartungs- und Montagezwecken ohne Weiteres zugänglich sind, ohne dass die Magnetleiste 12 in irgendeiner Weise im Weg wäre. Die aufgeschwenkte Position kann durch geeignete Arretiermittel fixiert werden, so dass der Monteur mühelos arbeiten kann.

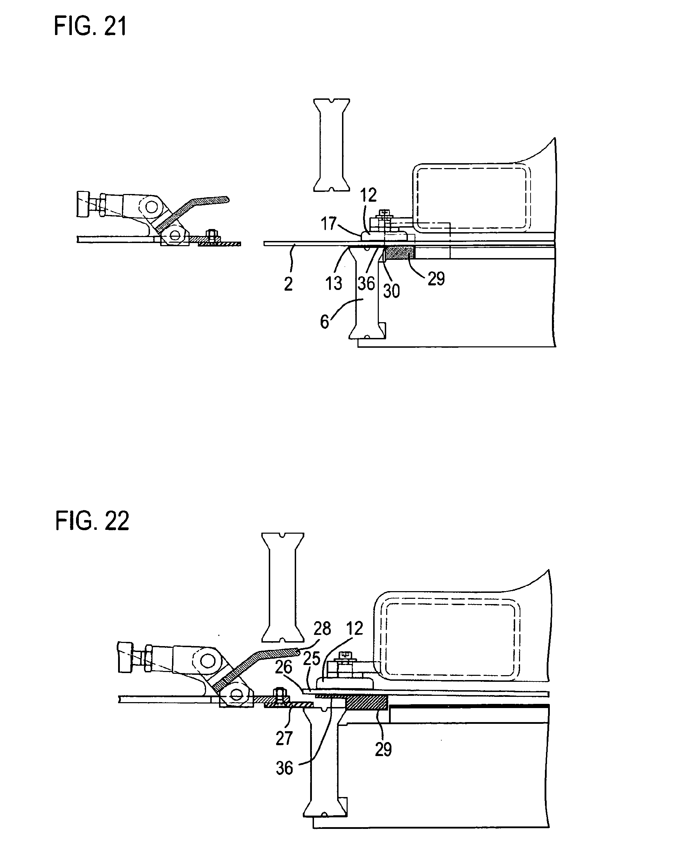

Die Fig. 21 und 22 zeigen schließlich eine weitere Ausführungsform einer erfindungsgemäßen Schneideinrichtung 1, die im wesentlichen der Ausführung nach den Fig. 11 - 19 entspricht, also ebenfalls eine Klemmplatte 29 aufweist. An der Klemmplatte 29 ist hier zusätzlich eine Zwischenplatte 36 vorgesehen, die vorzugsweise einteilig mit der Klemmplatte ist, also an dieser angeformt ist, oder als separates Bauteil daran befestigt ist. Die Zwischenplatte 36 erstreckt sich fahnenartig von der Klemmplatte 29 zur Seite weg und liegt in der abgesenkten Stellung der Klemmplatte 29 auf der Oberseite des Untermessers 6 auf, siehe Fig. 21. Die Magnetleiste 12 drückt das Band 2 auf die Oberseite der Zwischenplatte 36 und, nachdem die Magnetleiste das Untermesser 6 seitlich überragt, auch auf die Klemmplatte 29. Denkbar wäre es aber auch, dass die Magnetleiste kürzer ist und nur oberhalb der Zwischenplatte 36 verläuft. Die Zwischenplatte 36 erstreckt sich oberhalb des Untermessers 6 vorzugsweise soweit wie die Magnetleiste, so dass eine gute Klemmung über die gesamte Fläche gegeben ist.

Wird nut die Magnetleiste 12 zum Zweck des Unterfahrens der Bandkante 25 angehoben, siehe Fig. 22, so wird automatisch auch die Zwischenleiste 36 samt Klemmplatte 29 angehoben. Der Greifer 15 mit seinem Auflagerabschnitt 27 fährt unter den freien Bandabschnitt 25 und kann diesen nachfolgend klemmen. Die Vorderkante der Zwischenplatte und die Vorderkante des Auflageabschnitts sind, wenn beide in der gleichen Ebene sind, minimal voneinander beabstandet. Nach dem Klemmen kommt es durch hochfahren des Niederhalters 11 samt Magnetleiste 12 erneut zum Ablösen der Klemmplatte 29 nebst Zwischenplatte 36, beide fallen in die untere Stellung zurück bzw. werden gegebenenfalls aktiv dorthin bewegt.

## Patentansprüche

1. Schneideinrichtung zum Schneiden eines dünnen und klebrigen Bandes, insbesondere eines Cordbandes, umfassend ein Ober- und ein Untermesser (5, 6), eine Zugvorrichtung (14) zum Hindurchziehen des zu schneidenden Bandabschnitts durch die Messer (5, 6), sowie einen oberseitig auf das Band aufsetzbaren Niederhalter (11) umfassend eine Magnetleiste (12) zum Fixieren des Bands (2), welche Magnetleiste (12) direkt mit im Band (2) enthaltenen Metallelementen oder einer unterhalb des Bands (2) angeordneten Klemmplatte (29) derart zusammenwirkt, dass das Band (2) mit seiner vorlaufenden Kante zum Erfassen mit einem Greifabschnitt (15) der Zugvorrichtung (14) anhebbar ist, **dadurch gekennzeichnet, dass** die stets freiliegende Magnetleiste (12) in der das Band (2) niederhaltenden Stellung das Band (2) von oben direkt auf das Untermesser (6) oder eine das Untermesser (6) übergreifende Zwischenplatte (36) drückt.

2. Schneideinrichtung nach Anspruch 1, **dadurch gekennzeichnet, dass** die Magnetleiste (12) das Untermesser (6) um wenigstens ein Drittel, vorzugsweise um wenigstens die Hälfte der Messerbreite übergreift.

3. Schneideinrichtung nach Anspruch 1 oder 2, **dadurch gekennzeichnet, dass** die Zwischenplatte (36) an der Klemmplatte (29) vorgesehen ist.

4. Schneideinrichtung nach Anspruch 1 oder 2, **dadurch gekennzeichnet, dass** sich die Magnetleiste (12) über die nicht mit dem Obermesser (5) zusammenwirkende hintere Kante (30) des Untermessers (6) hinaus erstreckt, und dass die Klemmplatte (29) bis auf einen schmalen Spalt unmittelbar benachbart an das Untermesser (6) angrenzt.

5. Schneideinrichtung nach Anspruch 3 oder 4, **dadurch gekennzeichnet, dass** die Klemmplatte (29) vertikal bewegbar ist, wobei die obere Endstellung anschlagbegrenzt ist, oder die Klemmplatte über ein Stellelement, insbesondere einen hydraulischen oder pneumatischen Zylinder, vertikal bewegbar ist.

6. Schneideinrichtung nach einem der vorangehenden Ansprüche, **dadurch gekennzeichnet, dass** die Magnetleiste (12) an einem Träger (20, 21), der um eine in Förderrichtung des Bandes (2) gesehen vor den Messern (5, 6) liegende Schwenkachse (22) verschwenkbar und über wenigstens ein Stellelement (23), insbesondere einen hydraulischen oder pneumatischen Zylinder, zwischen einer das Band (2) mittels der Magnetleiste (12) niederhaltenden unteren Stellung und einer oberen Stellung mit vom Band (2) gelösten Magnetleiste (12) verstellbar ist, angeordnet ist.

7. Schneideinrichtung nach Anspruch 6, **dadurch gekennzeichnet, dass** der Träger (20, 21) bei Bedarf manuell oder über wenigstens ein gegebenenfalls weiteres Stellelement, insbesondere einen hydraulischen oder pneumatischen Zylinder, in eine oberhalb des Obermessers (5) liegende Stellung schwenkbar ist.

8. Schneideinrichtung nach einem der Ansprüche 1 bis 5, **dadurch gekennzeichnet, dass** die Magnetleiste (12) an einem vertikal bewegbaren Träger, der über wenigstens ein Stellelement, insbesondere einen hydraulischen oder pneumatischen Zylinder zwischen einer das Band (2) mittels der Magnetleiste (12) niederhaltenden unteren Stellung und oberen Stellung mit einer vom Band gelösten Magnetleiste (12) verstellbar ist, angeordnet ist.

9. Schneideinrichtung nach Anspruch 8, **dadurch gekennzeichnet, dass** der Träger bei Bedarf manuell oder über wenigstens ein gegebenenfalls weiteres Stellelement, insbesondere einen hydraulischen oder pneumatischen Zylinder, in eine oberhalb des Obermessers 5) liegende Stellung anhebbar ist.

## Claims

1. A cutting device for cutting a thin and adhesive web, especially a cord web, comprising an upper blade and a lower blade (5, 6), a pulling device (14) for pulling the web section to be cut through the blades (5, 6), and a holding device (11) capably of being placed on the upper side of the web and comprising a magnetic strip (12) for fixing the web (2), which magnetic strip (12) cooperates directly with metallic elements contained within the web (2) or with a clamping plate (29) arranged below the web (2) in such a manner that the web (2) can be raised with its forward edge to be gripped by a gripping portion (15) of the pulling device (14),
**characterized in that**,
in the position holding down the web (2), the constantly exposed magnetic strip (12) presses the web (2) from abode directly onto the lower blade (6) or onto an intermediate plate (36) engaging over the lower blade (6).

2. The cutting device according to claim 1,
**characterised in that**
the magnetic strip (12) engages over the lower blade (6) by at least once third, preferable by at least half of the with of the blade.

3. The cutting device according to claim 1 or 2,
**characterised in that**
the intermediate plate (36) is provided on the clamping plate (29).

4. The cutting device according to claim 1 or 2,
**characterised in that**
the magnetic strip (12) extends beyond the rear edge (30) of the lower blade (6) not cooperating with the upper blade (5), and that the clamping plate (29) engages immediately adjacent with the lower blade (6) apart from a narrow gap.

5. The cutting device according to claim 3 or 4,
**characterised in that**
the clamping plate (29) can be moved in a vertical direction, wherein the upper end position is limited by a stop, or the clamping plate can be displaced in a vertical direction via an adjustment element, especially a hydraulic or pneumatic cylinder.

6. The cutting device according two any one of the preceding claims,
**characterised in that**
the magnetic strip (12) is arranged on a carrier (20, 21), which can be pivoted about a pivotal axis (22) disposed in front of the blades (5, 6) viewed in the direction of motion of the web (2) and can be adjusted via at least once adjustment element (23), especially a hydraulic or pneumatic cylinder, between a lower position holding down the web (2) by means of the magnetic strip (12) and an upper position with the magnetic strip (12) released from the web (2).

7. The cutting device according to claim 6,
**characterised in that**
the carrier (20, 21) can be pivoted manually as required or via at least one optional, further adjustment element, especially a hydraulic or pneumatic cylinder, into a position disposed above the upper blade (5).

8. The cutting device according to many one of claims 1 to 5,
**characterised in that**
the magnetic strip (12) is arranged on a vertically displaceable carrier, which can be adjusted via at least one adjustment element, especially a hydraulic or pneumatic cylinder, between a lower position holding down the web (2) by means of the magnetic strip (12) and an upped position with a magnetic strip (12) released from the web.

9. The cutting device according to claim 8,
**characterised in that**
the carrier can be raised manually as required or via at least one optional, further adjustment element, especially a hydraulic or pneumatic cylinder, into a position disposed above the upper blade (5).

## Revendications

1. Dispositif de coupe pour couper une bande fine et collante, en particulier une bande de corde, comportant une lame supérieure et une lame inférieure (5, 6), un mécanisme de traction (14) servant à tirer le segment de bande à couper à travers les lames (5, 6) ainsi qu'un serre-flan (11) pouvant être appliqué sur la bande côté supérieur, serre-flan comportant une barre magnétique (12) pour maintenir la bande (2), laquelle barre magnétique (12) collabore directement avec des éléments métalliques contenus dans la bande (2) ou une plaque de serrage (29) disposée en dessous de la bande (2) de sorte que la bande (2) puisse être soulevée par son arrête avant afin d'être saisie à l'aide d'un segment de préhension (15) du mécanisme de traction (14), **caractérisé en ce que** la magnétique toujours à découvert (12) presse la bande (2), dans la position serrant la bande (2), à partir du haut, directement sur la lame inférieure (6) ou une plaque intermédiaire (36) recouvrant la lame inférieure (6).

2. Dispositif de coupe selon la revendication 1, **caractérisé en ce que** la barre magnétique (12) recouvre la lame inférieure (6) d'au moins un tiers, de préférence d'au moins la moitié de la largeur de la lame.

3. Dispositif de coupe selon la revendication 1 ou 2, **caractérisé en ce que** la intermédiaire (36) est prévue sur la plaque de serrage (29).

4. Dispositif de coupe selon la revendication 1 ou 2, **caractérisé en ce que** la barre magnétique (12) s'étend au-delà de l'arête arrière (30) de la lame inférieure (6) qui ne collabore pas avec la lame supérieure (5), et **en ce que** la plaque de serrage (29) est directement attenante à la lame inférieure (6) à l'exception d'une fente étroite.

5. Dispositif de coupe selon la revendication 3 ou 4, **caractérisé en ce que** la plaque de serrage (29) est déplaçable à la verticale, la position de fin de course supérieure étant délimitée par une butée, ou la plaque de serrage est déplaçable à la verticale par le biais d'un élément de réglage, en particulier un vérin hydraulique ou pneumatique.

6. Dispositif de coupe selon l'une quelconque des revendications précédentes, **caractérisé en ce que** la magnétique (12) est disposée sur un support (20, 21) qui peut être pivoté autour d'un axe de pivotement (22) situé devant les lames (5, 6) vu dans le sens de déplacement de la bande (2) et pouvant être déplacé, par le biais d'au moins un élément de réglage (23), en particulier un vérin hydraulique ou pneumatique, entre une position inférieure serrant la bande (2) au moyen de la barre magnétique (12) et une position supérieure avec la barre magnétique (12) détachée de la bande (2).

7. Dispositif de coupe selon la revendication 6, **caractérisé en ce que** le support (20, 21) peut être, au besoin, pivoté manuellement ou par le biais d'au moins un éventuel autre élément de réglage, en particulier un vérin hydraulique ou pneumatique, dans une position située au-dessus de la lame supérieure (5).

8. Dispositif de coupe selon l'une quelconque des revendications précédentes 1 à 5, **caractérisé en ce que** la barre magnétique (12) est disposée sur un support verticalement mobile qui est déplaçable, par le d'au moins un élément de réglage, en particulier un vérin hydraulique ou pneumatique, entre une position inférieure serrant la bande (2) au moyen de la barre magnétique (12) et la position supérieure avec une barre magnétique (12) détachée de la bande.

9. Dispositif de coupe selon la revendication 8, **caractérisé en ce que** le support peut être soulevé au besoin soit manuellement soit par le biais d'au moins un éventuel autre élément de réglage, en particulier un vérin hydraulique ou pneumatique, dans une position située au-dessus de la lame supérieure (5).
